# EUROPEAN PATENT SPECIFICATION

(11) **EP 1 097 041 B1**
(45) Date of publication and mention of the grant of the patent: **11.02.2004**
(21) Application number: 99907612.8
(22) Date of filing: 09.03.1999
(51) Int. Cl.: B32B 29/00, D21H 27/10, D21H 19/10

(54) **PROCESS FOR LAMINATED PACKAGING MATERIALS AND PACKAGING CONTAINERS PRODUCED THEREFROM**
HERSTELLUNGSVERFAHREN FÜR MEHRSCHICHTVERPACKUNGSMATERIALIEN UND DARAUS HERGESTELLTE VERPACKUNGSBEHÄLTER
PROCES POUR DES MATERIAUX D'EMBALLAGE COMPLEXES ET CONTENANTS D'EMBALLAGE PRODUITS A PARTIR DE CES DERNIERS

(30) Priority: 10.03.1998 SE 9800769; 13.05.1998 SE 9801675
(43) Date of publication of application: 09.05.2001
(73) Proprietor: Tetra Laval Holdings & Finance S.A., 1009 Pully (CH)
(72) Inventor: BENGTSSON, Jorgen, S-227 36 Lund (SE); BERLIN, Mikael, Fjelievagen 13B, S-227 36 Lund (SE); LETH, Ib, S-273 64 Kavlinge (SE); BENTMAR, Mats, S-233 37 Svedala (SE)
(74) Representative: Smart, Peter John
(86) International application number: PCT/EP1999/001495
(87) International publication number: WO 1999/046121

(56) References cited:
- EP-A- 0 622 179
- WO-A-97/16312
- WO-A-97/22536
- US-A- 3 661 697

## Description

The present invention relates to methods of producing laminated packaging materials comprising a core layer of paper or paperboard and a barrier layer applied on at least one side of the core layer.

The present invention also relates to a laminated packaging material producing according to the method, as well as to packaging containers which are produced from the laminated packaging material. Particularly advantageous packaging laminates in which starch or a starch derivative or PVOH is used as a barrier layer are provided.

It is well-known in the packaging industry to employ laminated packaging material of a single-use nature for packing and transporting liquid foods. Normally, such laminated packaging materials are built up from a configurationally rigid but foldable core layer consisting of, for example, paper or paperboard in order to achieve good mechanical configurational stability. Liquid-tight coatings of plastic are applied on both sides of the core layer and effectively protect the core layer of liquid-absorbing fibre from penetration by moisture. These outer layers normally consist of a thermoplastic, preferably polyethylene, which moreover impart to the packaging material superior thermosealing properties, whereby the packaging material may be converted into finished packages with the desired geometric configuration.

However, laminated packaging material consisting solely of paper or paperboard and liquid-tight plastic lacks tightness properties vis-à-vis gases, in particular oxygen gas. This is a major drawback in the packing of many foods whose shelf-life deteriorates dramatically when in contact with oxygen gas. In order to supplement the packaging material with a barrier against gases, especially oxygen gas, it is known in the art to apply a layer possessing superior oxygen gas tightness properties, for example aluminium foil or polyvinyl alcohol, on that side of the core layer which is intended to face in towards the inside of the package.

In comparison with aluminium foil, polyvinyl alcohol enjoys many desirable properties, with the result that it is. preferred as barrier material in many contexts. Among these, mention might be made of the polyvinyl alcohol's superior strength properties, compatibility with foods and economic value, together with its extremely good oxygen gas barrier properties. Moreover, it has been considered to be expedient, in certain cases from the point of view the environment and recycling, to replace aluminium foil as the gas barrier material in food packages.

Like many other conceivable barrier or adhesive polymers such as, for example, ethylene vinyl alcohol, starch, starch derivate, carboxy methyl cellulose and other cellulose derivatives or mixtures thereof, polyvinyl alcohol is suitably applied by means of a coating process, i.e. in the form of a dispersion or aqueous solution which, on application, is spread out to a thin, uniform layer on the substrate and thereafter dried. We have found that one drawback in this process however is that an aqueous polymer dispersion or polymer solution of polyvinyl alcohol with an addition of EAA which is applied on a core layer of paper or paperboard penetrates into the liquid-absorbing fibres of the core layer. In connection with the removal of water for drying and possibly for curing the applied barrier layer, the core layer is also subjected to elevated temperatures for drying, and as a result the risk of undesirable crack formation in the paperboard or paper layer, respectively, increases as a result of the moisture content which is difficult to adjust, and the drying which takes place in this layer.

Swedish Patent No. 440519 proposed , including a thickening agent such as alginate to reduce penetration of water into the board. The use of PVOH as a barrier material applied over a polymer layer preventing crack formation and smoothing the board surface was disclosed in PCT/SE96/01237 (WO97/13639 A1).

One drawback is that the polyvinyl alcohol is moisture sensitive and rapidly loses its barrier properties when it is exposed to a damp environment. This inconvenience was previously obviated according to WO97/22536 by combining the polyvinyl alcohol with one or more per se known food-approved polymers, for example ethylene acrylic acid copolymer (EAA) or styrene butadiene copolymer. These advantageously form, in combination with polyvinyl alcohol, a coherent, well-integrated layer possessing superior gas barrier properties, in particular oxygen gas barrier properties, at the same time as the desired superior gas barrier properties of the polyvinyl alcohol are retained even in a damp environment.

WO97/22536 disclosed that polyvinyl alcohol mixed with EAA-ethylene copolymer or like material could be dispersion coated onto a paperboard previously coated with a polymer and thereafter could be dried and cured at temperatures of up to 170°C to form a laminated packaging material with a very good barrier property.

Another drawback in the employment of, for example, polyvinyl alcohol as barrier layer instead of aluminium foil is that, on storage of light-sensitive foods, it is necessary in many cases also to incorporate into the packaging material a light barrier of some type. Granted, a core layer of paper or paperboard does not (to the naked eye) allow the passage of any light, but light in invisible wave length ranges nevertheless penetrates through from the outside of a packaging container to the packed food product and may have a negative effect on it from the point of view of shelf-life. The employment of aluminium foil in the packaging material enjoys that advantage that the aluminium foil in itself constitutes a good barrier against both gases and against light. On the other hand, polyvinyl alcohol is as good as completely transparent even in mixtures with a hydrophobic polymer such as ethylene acrylic acid copolymer or styrene butadiene copolymer. The admixture of conventional light barriers, such as carbon black and titanium dioxide into any of the plastic layers included in the laminated packaging material according to WO97/22536 is per se possible, but would entail an aesthetically unattractive appearance in the package.

Yet a further drawback inherent in the laminated packaging material including barrier layers of, for example, polyvinyl alcohol possibly together with another polymer as described in WO97/22536 is that this packaging material cannot be produced employing the same production equipment as in the production of packaging material using aluminium foil as the barrier layer, which involves capital investment costs for new production equipment.

As indicated above PVOH has environmental benefits as a barrier material. In addition to such synthetic materials, the possibility of using natural and biodegradable polymers (biopolymers) such as starch and starch derivatives, as gas barrier materials has been investigated.

It is previously known that starch possesses some gas barrier properties when employed in relatively thick layers, such as in films having a thickness of about 20 to 30 µm. Such thick layers of starch material are not suitable for use in packaging laminates however, since they become brittle and are prone to cracking and breaking upon handling, for example in the lamination process and when fold forming of the laminate into packages. Besides not being flexible in handling at manufacturing and distribution, laminates including such thick layers of starch would also be capable of absorbing more moisture, which would influence the gas barrier properties negatively.

From WO97/16312 it is known that very thin layers of starch applied on to a core layer may provide some gas barrier properties, at least when employed together with an adjacent layer of plastics, which has been united with starch barrier layer by extrusion coating of the plastics material. Two very thin layers of starch, applied in a quantity of 0.5 and 1 g/m² respectively, dry weight, on to opposite sides of a core layer of paperboard and each extrusion coated with a layer of plastics, provided an oxygen gas barrier of 289 cm³/m², per 24 h at 1 atm. Similarly, two layers of starch, applied in a quantity of 1 and 1.5 g/m² respectively, provided and oxygen gas barrier of 141 cm³/m², per 24 h at 1 atm. The results obtained were thus, comparable with the gas barrier properties of, for example, a 12 µm thick film of oriented PET, thus representing a "medium performance barrier" material.

The packaging laminate WO97/16312 is, however, merely a medium performance gas barrier material. This means that it may only be used for packaging of liquid food products during short time periods of cool storage. It is not hitherto known in the prior art to produce packaging laminates having high performance gas barrier properties from starch or starch derivative barrier materials. It would be much more desirable to be able to provide packaging material having sufficient gas barrier properties for long time storage of liquid food products, i.e. for extended shelf life (ESL) at cool storage or even for aseptic storage. Such desirable high performance oxygen gas barrier properties are in order of about 50 cm³/m² at 24 h, 1 atm (23°C, 50% RH) or better, e.g. up to 30 cm²/m² at 24 h 1 atm, i.e. oxygen gas barrier properties comparable to those of, for example, PVOH, EVOH (ethylene vinylalcohol copolymer) or polyamides (PA) when employed at a thickness of the order of about 5 µm.

FR-A-2684922 discloses coating a polymer film such as polyester with a dispersion of amylose starch containing surfactant and drying the starch at a temperature of up to 180°C. Good gas barrier properties are obtained at coating levels of for instance 0.7 g(dry)/m². However, there is no indication that similar properties might be obtainable in a laminated packaging material having a paper or paperboard core.

We have now found that a laminated packaging material possessing adequate barrier properties, in particular against gases, may be produced using a method which lends itself to being carried out using conventional production equipment of the type employed in the production of packaging materials with aluminium foil as the barrier layer.

We have also now established that it is possible in a packaging laminate to obtain high performance oxygen barrier properties from the use of starch and similar materials.

According to a first aspect of the invention, there is now provided a method of producing a laminated packaging material comprising a core layer of paper or paperboard and a gas barrier layer applied on one side of the core layer, characterised in that polymer dispersion of polymer solution is applied as a gas barrier layer on at least one side of a carrier layer and is dried during heating for driving off water, whereafter the carrier layer with the applied, dried gas barrier layer is combined and permanently united with one side of the core layer.

Preferably, the gas barrier layer is applied by coating with an aqueous polymer dispersion or solution. PVOH may be applied as an aqueous solution, whilst starch may be partially dispersed and partially dissolved in water.

The polymer preferably has functional hydroxyl groups, and may for instance be selected from among polyvinyl alcohol, ethylene vinyl alcohol, starch, starch derivatives, carboxyl methyl cellulose and other cellulose derivatives, or a mixture of two or more thereof.

Said aqueous polymer dispersion or polymer solution applied as gas barrier layer may be dried and optionally cured at a temperature of 80 to 200°C. For non-curing materials it is preferred to operate at a temperature of approximately 80 to 130°C.

Most preferably, materials such as PVOH are preferably first dried at web temperatures from 80 to 160°C (preferably 140 to 160°C) in a first step and are then cured at web temperatures from 170 to 230°C in a second stage resulting in an improved gas barrier at 80% RH. Optionally, the carrier and gas barrier material may be cooled between the two steps.

A polymer with functional carboxylic acid groups may also be included. This may react with the polymer with functional hydroxy groups during the drying/curing process.

Suitably, the polymer with functional carboxylic acid groups is selected from among ethylene acrylic copolymer and ethylene methacrylic acid copolymers or mixtures therof.

One particularly preferred gas barrier layer mixture is of polyvinyl alcohol and ethylene acrylic acid copolymer.

Optionally, the gas barrier layer is first dried and is then heated to a higher temperature so that the dried gas barrier layer is cured at a temperature of up to 230°C, preferably up to 190°C, for example 170°C.

The said gas barrier layer is preferably applied on the carrier layer in an amount of 0-5-20 g/m², more preferably 2-10 g/m², based on dry weight.

Said carrier layer may consist of paper or plastics or plastics coated paper and preferred materials are described below.

In one option the carrier layer preferably consists of paper with a grammage of 15-35 g/m², e.g. 15-25 g/m², more preferably 15 g/m².

The carrier layer bearing the gas barrier material and the core layer may be assembled together in various ways.

The carrier layer bearing at least one said gas barrier layer may be combined and united with the core layer by extrusion of a layer of thermoplastics therebetween.

Where said carrier layer bears a said gas barrier layer on one side thereof it therefore may be combined with the core layer by extrusion of a layer of thermoplastics between the carrier layer and the core layer.

An outer layer of thermoplastics preferably polyethylene is optionally applied on the gas barrier layer by means of extrusion.

When said carrier layer bears a said gas barrier layer on one or both sides it may be combined with the core layer by extrusion of a layer of thermoplastics between the core layer and a said gas barrier layer.

If said carrier layer bears a said gas barrier layer on both sides thereof, a layer of thermoplastics may then be applied to the outer layer of barrier material by extrusion.

The layer of plastics applied between the core layer and the carrier layer or a said gas barrier layer may include a substance functioning as light barrier. This is especially preferred when the carrier layer is of paper or other visually non-transparent material.

By applying, in a separate production stage, an aqueous polymer dispersion or polymer solution as a gas barrier layer on at least one side of a carrier layer and drying the gas barrier layer during heating for driving off water, and thereafter combining and permanently uniting the carrier layer with the applied, dried gas barrier layer to one side of the core layer, there will be realised a laminated packaging material with a gas barrier layer possessing superior gas barrier properties.

Thanks to the fact that the barrier layer is not dried or cured at elevated temperature in connection with the lamination of the packaging material, the risk of excessive water absorption into the core layer and of drying of the core layer of paper or paperboard - with consequential risk of crack formation in the core layer - is wholly eliminated.

Given that the plastics layer applied between the core layer and a paper carrier layer may include a substance serving as light barrier, ideally carbon black, a light barrier layer will be realised whose unattractive black appearance may be concealed in a layer between the core layer and a thin paper layer carrying the gas barrier layer.

One advantage of the method according to this aspect of the present invention is that the gas barrier layer produced in a separate stage may be employed in the production of a laminated packaging material in a corresponding manner and using corresponding production equipment as are employed today in the production of packaging materials with aluminium foil as the oxygen gas barrier.

We have also now established that it is possible in a packaging laminate to obtain high performance oxygen barrier properties from the use of starch and similar materials.

Accordingly, the present invention now provides a packaging laminate produced by the method described above having a paper or paperboard core and one or more gas barrier layers of starch or a starch derivative providing an oxygen gas barrier property of 50 cm³/m² at 24 h, 1 atm (23°C, 50% RH) or better, said gas barrier layer or layers having a dry coating weight or aggregate coating weight no more than 7 gm⁻². Preferably, oxygen barrier property provided by the starch or starch derivative layer is 40 cm³/m² at 24 h, 1 atm (23°C, 50% RH) or better. More preferably the oxygen barrier property. is up to 30 cm²/m² at 24 h, 1 atm (23°C, 50% RH), e.g. 10 cm³m² at 24 h, 1 atm (23°C, 50% RH) or below.

Preferably, the packaging laminate comprises a layer of plastics polymer, preferably a thermoplastics, e.g. polyethylene, laminated directly with the said gas barrier layer. Most preferably, said polymer is LDPE. Other thermoplastics that may be employed include all other kinds of polyethylene (including LLDPE, ULDPE, VLDPE, MPE and HDPE), polyproplylene, and polyethleneterephthalate.

The gas barrier layer is applied at a dry coating weight of up to 7 gm⁻², preferably up to 5 gm⁻², e.g. from 0.5 to 5 gm⁻², more preferably 0.5 to 4 gm⁻², e.g. from 3 gm⁻², suitable from 1.5 to 2 gm⁻².

We prefer that the gas barrier layer be made entirely from natural materials but it is acceptable to include minor amounts of other polymeric materials which do not interfere with the desired properties. For instance the gas barrier layer may further comprise a minor amount of water soluble or water dispersible polymers having functional hydroxyl groups, e.g. polyvinyl alcohol, and carboxyl group containing polyolefins such as ethylene acrylic acid, or a mixture thereof. The amount of such materials may eb from 0 to 30%, e.g. 0 to 20% or 0 to 10% by weight.

We have observed that when polyethylene is applied to a layer of starch at a high temperature, e.g. over 200°C, the gas barrier properties of the starch are improved and that under appropriate conditions can be made to reach or move further into a high performance level. The method of obtaining optimal properties is to apply the starch or starch derivative not to a thick core layer as in WO97/16312 but to a separate carrier. Suitably, the gas barrier layer is carried by a carrier layer of paper or plastics.

When paper is employed it is preferably thin, e.g. said carrier layer may be of paper having a surface weight of from 10 to 35 g/m² preferably from 10 to 25 g/m². The paper may also be coated beforehand with a layer of plastics.

After application of the starch, the carrier may be combined with the paper or paperboard core material so that the packaging laminate comprises a core layer having said carrier layer on one surface side thereof. There may be one or more layers including a heat sealing layer on the other surface side of said core layer.

The surface of the carrier layer to which the starch or starch derivative is applied is preferably substantially impervious to said liquid vehicle.

The degree to which the surface is impervious may be measured by measuring surface adsorption, e.g. in Cobb units. ('Cobb' = g(water)/m² adsorbed on to the surface in 60 seconds exposure to liquid water). Adsorption of other liquids could be measured in an analogous method. The method of measuring Cobb adsorption is defined in SCAN P12-64 and in TAPPI T441. The surface adsorption of plastics is generally about 1 Cobb, whilst a smooth paper surface will generally have an adsorption of about 20 to 30 Cobb. Suitably, for use in the invention the carrier layer surface should have an adsorption of 50 Cobb or less, preferably an adsorption of 30 Cobb or less, more preferably an adsorption of less than 20 Cobb or most preferably an adsorption of 10 Cobb or less, e.g. less than 5 Cobb.

Preferably, the surface of the carrier layer to which the starch or starch derivative is applied has a smoothness of 200 Bendtsen or better. The method of measuring Bendtsen smoothness is defined in SCAN (Scandinavian Pulp and Paper Norms) P21-67 and in TAPPI UM535.

Where the substrate is plastics or has a plastics surface, such desired smoothness is usually obtained, such as in, for example, a film of plastics or a plastics coated paper carrier layer.

One reason why a high barrier property was not achieved in WO97/16312 may be that the paperboard core layer lacked the requisite degree of impermeability so that the aqueous solution of starch which was employed may have penetrated the surface. This might have an adverse action in a number of ways. There may not then be a smooth and unbroken surface to the starch layer because of penetration as such into the paperboard. Alternatively, or additionally, drying of the paperboard to dry the starch layer may cause surface deformation of the paperboard and hence cracking of the starch layer. These problems are obviated when the starch is applied to a separate, smooth, impervious carrier layer which is subsequently laminated to the core layer.

The paperboard used in WO97/16312 would typically be expected to have had a surface smoothness of 500-600 Bendtsen. This may in itself have been sufficient to prevent the starch layer being smooth and unbroken or from having thin areas providing a path for oxygen transmission.

In order to avoid cracks, punctures or deformations in the starch or starch derivative layer, it is preferred that the surface on to which it is applied is smooth, e.g. that the substrate surface has a smoothness of 200 Bendtsen or better (i.e. less), e.g. from up to 150 Bendtsen, more preferably about 100 Bendtsen.

The materials described as carriers for use with starch can also be used with the other barrier materials used according to the invention. However, generally a plastics film carrier is preferred when using starch and the use of a thin paper carrier is preferred for gas barrier materials such as PVOH which may be heated to temperatures above 100°C for drying and curing.

Starch for, use in the invention may be of any conventional type although certain starches provide better results than others under the conditions we have used. Modified potato starch is preferred, such as Raisamyl 306 (Raisio) which is hypochlorite oxidised. Other acceptable starches include corn starch and derivatives, such as Cerestar 05773 a hydroxypropylated corn starch.

Starch derivatives that are suitable for use in the invention include oxidised starch, cationic starch and hydroxpropylated starch.

It will be understood when the gas barrier property of the packaging laminates of the invention is referred to as being provided by a particular material, e.g. starch or a starch derivative, this does not exclude the case where the gas barrier property is the result of an interaction between the stated material and an adjacent layer in the laminate, rather than a bulk property of the stated material viewed in isolation.

It may be that a contributing mechanism in the improvement in barrier property noted when polyethylene is applied at a high temperature to a layer of starch comes from penetration of polyethylene molecules into the starch, replacing water in starch crystals. Other polymers producing a similar effect may be used.

Said plastics layer may be applied to said starch or starch derivative by melt extrusion or may be applied as a pre-formed film by hot pressure lamination e.g. with a heated roller. Generally, any technique may be employed in accordance with this preferred embodiment that provides the required modification of the barrier property of the starch.

Preferably, said plastics layer is bonded to the starch or starch derivative at a temperature of at least 200°C, preferably from 250 to 350°C more preferably from 250 to 330°C.

The invention includes a packaging container or package formed using a packaging laminate as described or made by a method as described according to the invention.

The present invention will now be described and illustrated in greater detail herein below with the aid of non-restrictive examples of methods, as well as packaging laminates obtainable by the method, according to preferred embodiments of the present invention and with reference to the accompanying drawings, in which:
Figure 1 schematically illustrates a method of producing a carrier layer with a barrier layer for use in the present invention applied thereon;
Figure 2 schematically illustrates a method of producing a laminated packaging material according to the present invention;
Figure 3 is a cross sectional view through a laminated packaging material according to the present invention;
Figure 4 is a perspective view from above of a conventional, configurationally stable packaging container which is produced from a laminated packaging material according to the present invention;
Figure 5 (a, b, c, d) schematically illustrate cross-sections of four different packaging laminates according to specific embodiments of the invention; and
Figure 6 (a, b, c, d) schematically illustrates the methods of manufacturing of the respective packaging laminates as described in Figure 5.

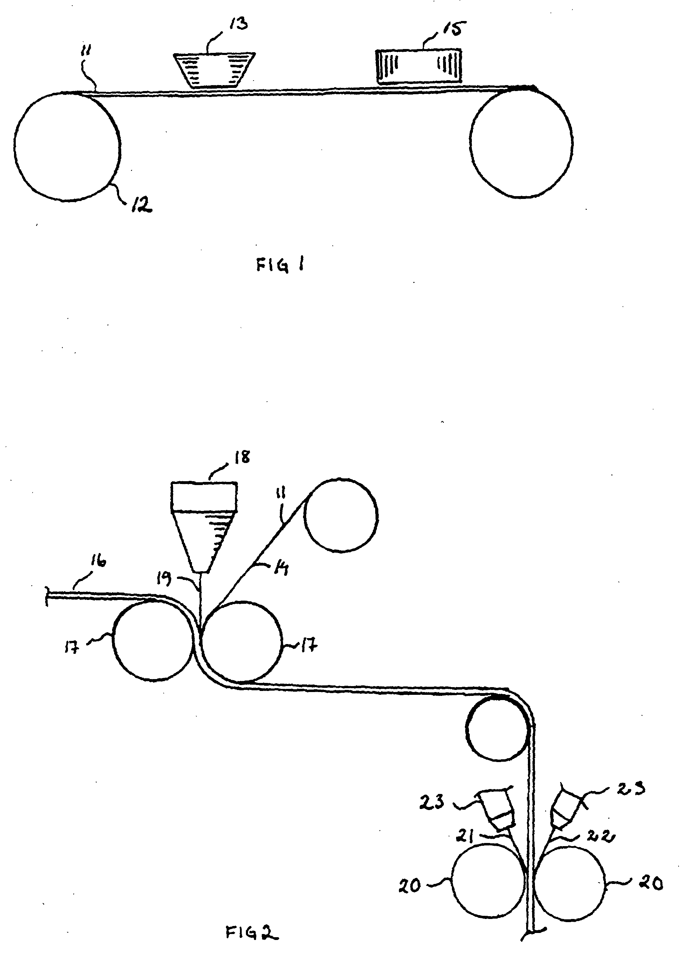

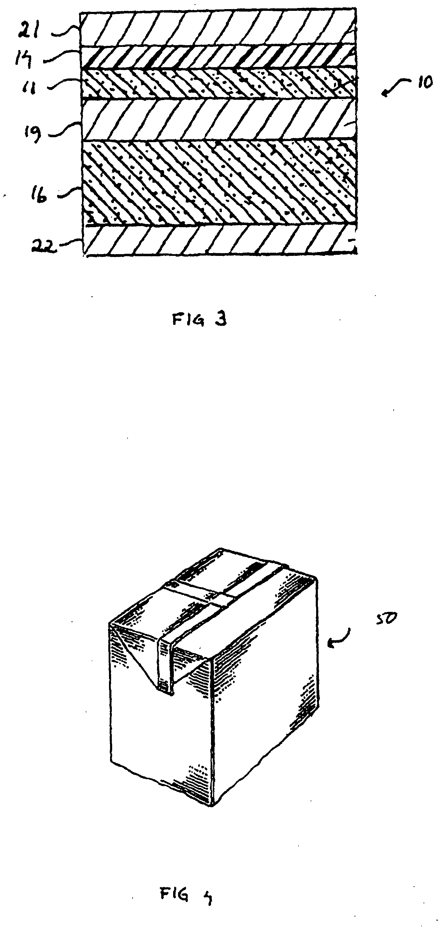

Referring to the Drawings, Figs. 1 and 2 schematically illustrate a method according to the present invention chosen by way of example for producing a laminated packaging material 10 shown in Fig. 3. A web of a carrier layer 11, for example of thin paper, which may optionally be coated with a layer of plastics, is unwound from a magazine reel 12 and led past an applicator 13 (ideally a coating apparatus) disposed adjacent the web, by means of which at least one barrier layer 14 of aqueous polymer dispersion or polymer solution is applied on the one side of the carrier layer 11 in the form of a substantially cohesive barrier layer 14. In the case of a plastics coated paper carrier layer, the polymer dispersion or solution is preferably applied to the plastics coated side. The quantity of applied solution may vary, but is preferably in such an amount that a thoroughly integrated and substantially unbroken layer is formed after drying, for example approx. 0.5-20 g/m², preferably 2-10 g/m², based on dry weight.

Where PVOH is used, the carrier layer 11 preferably consists of a layer of thin paper with a grammage of approximately 10 to 35 g/m², preferably 10 to 25 g/m², preferably 15 to 20 g/m², but may also be a plastics layer. However, thin paper enjoys the advantage that it does not alter dimensions on temperature increases in connection with drying and possible curing, which does not apply to plastics. Generally, where the polymer applied is to be cured at above about 130°C, the use of plastics film as carrier is not recommended.

The barrier layer 14 is applied on the carrier layer 11 in the form of an aqueous polymer dispersion or polymer solution which includes a polymer with those properties which are desired to be added to the packaging laminate in the form of a coated layer, for example a polymer with functional hydroxyl groups, for instance polyvinyl alcohol, ethylene vinyl alcohol, starch, starch derivate, carboxy methyl cellulose and other cellulose derivates or mixtures thereof.

The barrier layer 14 may also include a hydrophobic polymer as described in WO97/22536, for example a styrene butadiene copolymer.

The barrier layer 14 may also include a polymer with functional groups which are reactive with the functional hydroxyl groups in the above-mentioned polymer, for realising a cross-linked barrier layer 14. Such polymers may be polyolefins modified with carboxyl acid groups or graft copolymers with monomers containing carboxyl acid groups in an olefin homo- or copolymer. Alternatively, such polymers may be random selected copolymers of olefin monomers and monomers containing functional carboxylic acid groups, such as carboxylic acids, carboxylic acid anhydrides, metal salts of carboxylic acids or derivates thereof. Specific examples of suitable functional polyolefins include polyethylene and polypropylene homo- or copolymers grafted with maleic acid anhydride, ethylene acrylic acid (EAA) or ethylene metacrylic acid (EMAA), or random selected copolymers.

It is particularly preferred that the barrier layer 14 includes a mixture of polyvinyl alcohol and ethylene acrylic acid copolymer. The mixing ratio between polyvinyl alcohol and ethylene acrylic acid copolymer in the barrier layer 14 should be such that the polyvinyl alcohol may form a blanket protection against gas transport in the packaging laminate, at the same time as the quantity of ethylene acrylic acid copolymer should be sufficient to form a cohesive phase which partly protects the polyvinyl alcohol and partly effectively counteracts or prevents the transport of liquid through the barrier layer 14.

The web of carrier layer 11 is led, after coating, further past a drying apparatus 15, e.g. an IR drier or a hot air drier which acts on the coated side of the carrier layer 11 for driving off water and drying, and possibly curing the applied barrier layer 14 at a drying temperature of approx. 80-100°C, preferably approx. 90-95°C, and, where applicable, a curing temperature for cross-linking the functional groups included in the coated polymer mixture, a temperature of up to approx. 190°C, preferably 170°C.

Finally, the finished carrier layer 11 with the applied barrier layer 14 is rolled up and may subsequently be stored or employed direct in a conventional lamination process for the production of a laminated packaging material 10 possessing superior barrier properties.

The carrier layer 11 with the applied barrier layer 14 may ideally be employed for the production of packaging material 10 in a corresponding manner and using corresponding production equipment to that employed in the production of packaging material with aluminium foil as the barrier layer. Fig. 2 shows a web of a configurationally rigid but foldable core layer with a grammage of approx. 100-500 g/m², preferably approx. 200-300 g/m², which may be a conventional fibre layer of paper or paperboard of suitable packaging qualities. The core layer 16 is led through the nip between two rotating rollers 17 and is united with a web of carrier layer 11 with dried or cured barrier layer 14, during the application - employing an extruder 18 - of one or more layers of extrudable thermoplastic 19, preferably polyethylene, between the core layer 16 and the carrier layer 11. As shown, the barrier material 14 is on the outer face of the carrier layer but it may alternatively be on the inner face.

The thus laminated web is finally led through the nip between two rotating rollers 20 under the simultaneous application of thin layers 21, 22 of extrudable thermoplastic, preferably polyethylene, against both outer sides of the web employing extruders 23, the finished laminated packaging material 10 according to the present invention obtaining the cross-sectional structure schematically shown in Fig. 3. Alternatively, two extruders 23 may be disposed in sequence for the consecutive extrusion of thin layers 21 and 22 of thermoplastic on the respective outer sides of the laminated web.

The two plastics layers 21 and 22 have for their purpose, on the one hand, to protect the packaging material 10 from the penetration of moisture and damp from the outside and, also the function of rendering the packaging material sealable by conventional so-called thermosealing, whereby mutually facing layers of plastic may be joined together under the supply of heat and pressure by surface fusion. The thermosealing operation realises mechanically strong, liquid-tight sealing joints during the conversion of the packaging material into finished packaging containers.

The outer plastic layer 22 which is applied on the packaging material 10 on that side of the core layer 16 which, in the finished packaging container, is intended to be turned to face towards the outside may be provided with a suitable print of a decorative and/or informative nature for identifying a packed product.

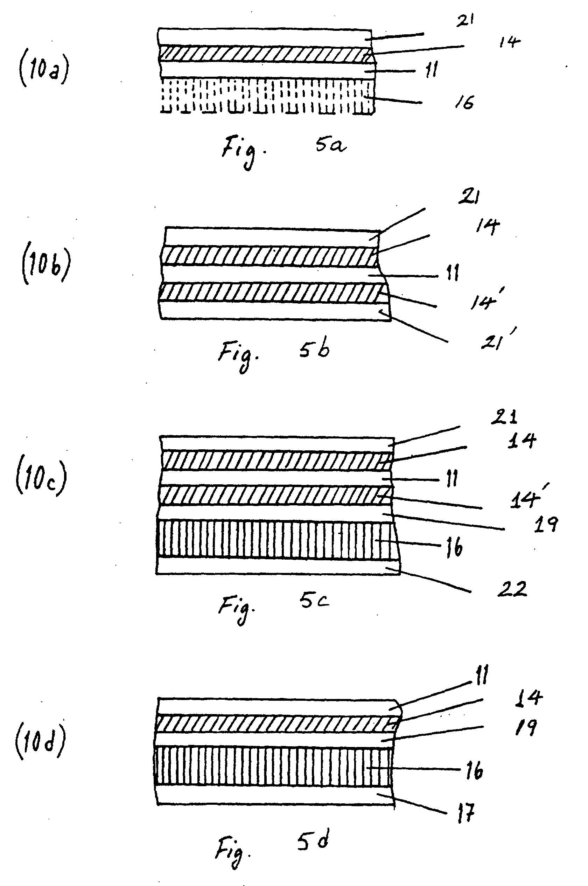

From the laminated packaging material according to the present invention, liquid-tight, dimensionally stable packages 24 possessing superior oxygen gas barrier properties may be produced employing known packaging and filling machines which, in a continuous process, form, fill and seal the material into finished packages 50. An example of a such a conventional, packaging container 50 is shown in Fig. 4.

By first uniting the longitudinal edges of a web-shaped laminated packaging material 10 into a tube which is filled with the contemplated contents, whereafter individual packages 50 are separated from the web by repeated transverse sealing of the tube below the level of the contents. The packages 50 are separated from one another by incisions in the transverse sealing zones and obtain the desired geometric configuration, normally parallelepipedic, by a final fold formation and sealing operation.

It should be noted that the various packaging laminates according to the invention may comprise a multiple number of layers in addition to those shown in the drawings. It will thus be obvious to a person skilled in the art that the number of layers may vary and that the description of the illustrated embodiments should not, therefore, be considered as restrictive of the present invention.

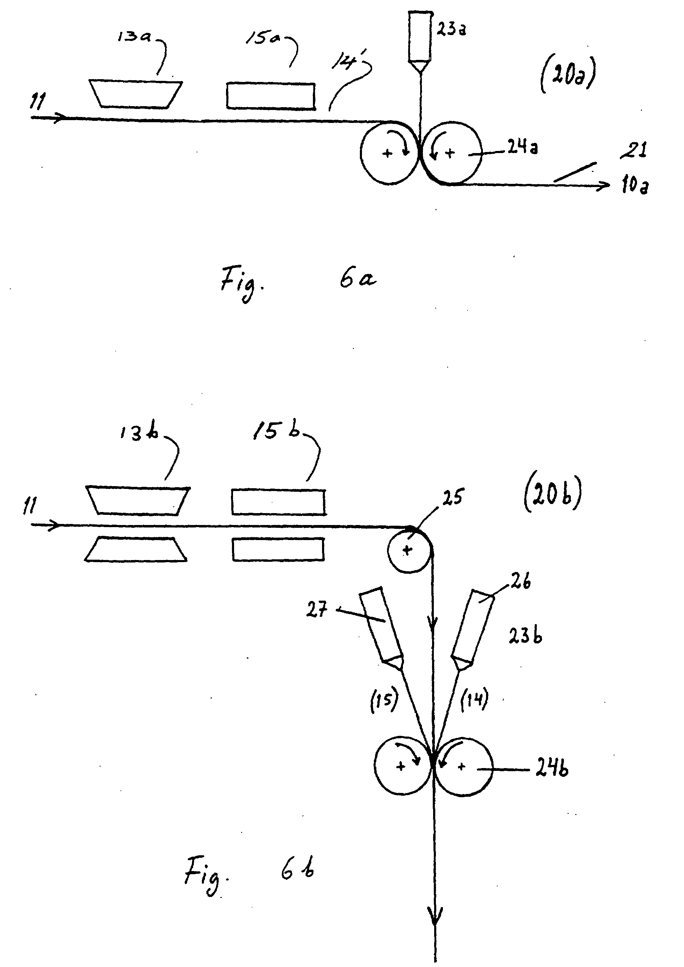

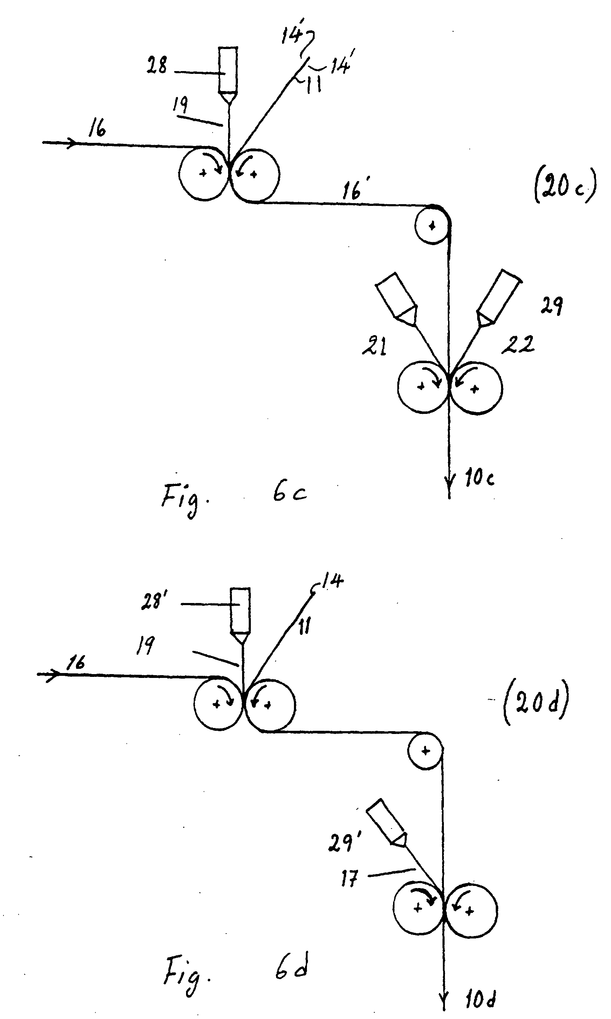

Figure 5a thus schematically illustrates a cross-section of a packaging laminate according to a simple embodiment of the invention, carrying the generic reference numeral 10a, while Figure 6a schematically illustrates the method (denoted 20a) of manufacturing of the carrier layer structure used in the laminate 10a. The laminate 10a comprises a carrier layer 11, whose surface has a smooth, essentially non-absorbing texture. The carrier layer 11 may be a plastics film, or a thin paper having said surface qualities. A thin paper substrate having a surface weight of about 10-25 g/m2 is not able to absorb much from the starch solution both since it is very thin and since such commercially available thin papers usually have very smooth and glossy, hard surfaces. A particularly suitable paper for this purpose is so-called glassine paper, which, however, is rather expensive compared to other commercially available papers. Suitably, the paper may be MG Kraft paper (Munksjö) of 10 to 25 g/m2 surface weight, MG indicating that the paper is smooth on one surface, which is where the starch should be applied preferably. Most preferably, the substrate 11 is a plastics film since it has the most advantageous surface properties.

A thin layer of an aqueous solution or dispersion of starch is applied on to the upper side of a web of substrate layer 11, which is led in the direction of the arrow from a magazine reel (not shown) to a coating station 13a. A starch solution is preferably applied by means of liquid film coating technology, also called "dispersion coating" or "wet coating", which is well known in the prior art of coating of aqueous solutions and dispersions, but also other coating methods are feasible according to the invention, e.g. spray coating. The aqueous starch solution is applied in such a quantity that the applied and dried starch layer 14 has a thickness/surface weight of from about 0.5 to about 3 g/m2.

The web coated with aqueous solution is led further to a drying station 15a at which the web is dried with aid of a drying apparatus for removing water from the applied aqueous starch solution. Drying may be carried out by any conventional drying apparatus such as an infra-red (IR) drier or an air drier. Preferably, drying takes place at a temperature of about 80-100°C.

From the drying station the dried web, having an upper layer 14 of starch, is led further to an extruder station at 23a at which the web and starch layer is further laminated to a layer of plastics 21. The lamination of the starch surface to the plastics layer is carried out by means of surface fusion between plastics layer and the starch layer 12, which is obtained by simultaneous application of heat and the plastics. Preferably, molten polymer is extruded on to the dried starch layer at the same time as the web is led through the nip between two rotary cooling rollers 24a, thus forming a laminate providing the upper three layers of the packaging laminate 10a as shown by a cross-section view in Figure 1a, having an outer layer of plastics 21, laminated to the starch layer 14. The extruded plastics material is (preferably) a thermoplascic polymer, preferably a polyethylene and most preferably LDPE, which enables efficient conversion of the packaging laminate 10a into liquid-tight, dimensionally stable packages by so-called heat sealing. The extrusion temperature should be at least 200°C, preferably from about 250°C to about 330°C.

Alternatively, said surface fusion between the starch layer 14 and the plastic layer 21 may be obtained by laminating a pre-manufactured film of thermoplastic to the dried starch layer 14 by means of simultaneous application of heat and pressure, preferably by means of leading the starch-coated substrate and the plastics film together through a hot roller nip, whereby the temperature supplied by the hot rollers is at least 200°C and up to about 350°C, preferably from about 250°C to about 330°C.

The three layer laminates so produced may then be laminated to a paperboard core 16 as shown in Figure 2 to produce the packaging laminate 10a.

Figure 5b schematically illustrates a cross-section of a packaging laminate 10b according to another embodiment of the invention and Figure 6b schematically illustrates the method (denoted 20b) of manufacturing of the laminate 10b.

According to this embodiment of the invention, the substrate or carrier layer 11 is coated on both sides by an aqueous starch solution in the same way as described in the embodiment of Figures 5a and 6a.

Consequently, the laminate 10b, which has been manufactured by the method of Figure 6b, comprises a substrate layer 11 as defined above, preferably being a film of plastics, a thin layer of starch (14, 14') applied on to each side of the substrate layer 11 and the outer layers of plastics (21, 21') laminated to the outer sides of respective starch layers, by means of surface fusion of the outer plastics layers and the starch obtained by simultaneous application of heat as described above. With such a layer structure, a double gas barrier effect should be obtained, since two fusion bonded interfaces between starch and plastics are obtained.

Accordingly, with the method of Figure 6b, a thin layer of an aqueous solution of starch is applied on to each side of a web of a substrate layer 11, which is led in the direction of the arrow from a magazine reel (not shown) to a coating station 13b. The starch solution is preferably applied by means of dispersion coating technology in such a quantity on to each side of the substrate layer 11, that the applied and dried starch layers 14, 14' each have a thickness/surface weight of from about 0.5 to about 3 g/m2.

The web coated with aqueous solution is led further to a drying station 15b at which the web is dried with the aid of a drying apparatus for removing water from the applied layers of aqueous starch solution. Preferably, drying takes place at a temperature of about 80-100°C, as described above.

From the drying station the dried web, having an upper layer 14 and a lower layer 14' of starch, is led further via a bending roller 25 to an extruder station at 23b at which the web is further coated with a layer of plastics on each side. Thus the layers of plastics 21 and 21' are applied by means of respective extruders 26, 27 operating on each side of the web. The molten polymer is extruded on to the dried starch layers at the same time as the web is led through the nip between two rotary cooling rollers 24b, in principle as described above, thus forming a laminate 10b as shown by a cross-section view in Figure 5b. The laminate 10b may be united with a core layer to form a finished packaging unit as shown in Figure 2.

Figure 5c schematically illustrates a cross-section of a packaging laminate 10c according to an alternative embodiment of the invention while Figure 6c schematically illustrates the method (denoted 20c) of manufacturing of the laminate 10c.

A paper or paperboard core layer for use in the invention usually has a thickness of from about 100 µm up to about 400 µm, and a surface weight of approximately 100-500 g/m2, preferably about 200-300 g/m2.

According to the method 20c, a first web of such a core layer 16, is led in the direction of the arrow from a magazine reel (not shown) to an extrusion lamination station 28 at which a second web of the carrier layer 11 having a dried layer of starch 14, 14' applied on to each side is superposed and laminated to the core layer by means of an intermediate melt extruded lamination layer 19 of a thermoplastics polymer, preferably a polyethylene and most preferably LDPE.

The web of laminated core, starch and substrate layers 16' is further led to an extruder station 29 at which an outer layer of thermoplastics 21, 22, such as preferably LDPE, is further extruded on to each side of the laminate 16', such that the starch layer on the outer side of the substrate layer 11, which is opposite to the side which is laminated to the core layer, as well as the opposite side of the core layer 16, are both coated by the extruded thermoplastics, thus forming layers 21 and 22.

Suitable thermoplastics for the outer layer 14 are polyolefins, preferably polyethylenes and most preferably low density polyethylenes such as, for example LDPE, linear LDPE (LLDPE) or single site catalyst metallocene polyethylenes (m-PE). The outer layer 22, which eventually will form the outside of the packaging container manufactured from the packaging laminate, may alternatively be applied on to the core web 16 in a step before the coating and drying steps of the starch solution.

Figure 5d schematically illustrates a cross-section of a packaging laminate 10d according to another embodiment of the invention while Figure 6d schematically illustrates the method (denoted 20d) of manufacturing of the laminate 10d. The packaging laminate 10d is manufactured by applying and drying of a thin layer of an aqueous starch solution 12 on to the upper side of a substrate layer 11, which is constituted of a plastic film, as described in the method 20a above, in an initial step.

According to the method 20d, a first web of the core layer 16, is led in the direction of the arrow from a magazine reel (not shown) to an extrusion lamination station 28' at which a web of the substrate layer 11 having a dried layer of starch 14 applied on to one side, is super-posed such that the starch layer 14 is directed towards the core layer and laminated to the core layer by means of an intermediate melt extruded lamination layer of a thermoplastics polymer, preferably a polyethylene and most preferably LDPE. The substrate layer 11, i.e. the plastics film, may form an outer layer of the packaging laminate to be directed inwards in a packaging container manufactured therefrom, thus providing a container inside layer. In a final extruder station 29', the cuter thermoplastic layer 17 is applied by means of extrusion coating.

A problem of the laminates described in WO97/16312 is that their manufacture would require completely different machinery to that of the paperboard laminates using aluminium foil as a gas barrier which are in conventional use. Such packaging laminates are made by extrusion laminating a paper board substrate to the barrier foil using polyethylene. In contrast, as can be seen from the above, a carrier layer of plastics or thin paper bearing a starch coating on one or both faces, with or without plastics already applied to the starch layer or to one or both of them, can simply be substituted for the aluminium foil in conventional machinery with minor adjustment. The preparation of the starch bearing carrier material can be done completely separately in another facility if need be so that an existing converting line in a factory can readily be adapted to use the new materials.

Thus a further important advantage by a preferred embodiment of the method illustrated, is that the steps of application and drying of the starch solution may be performed off the lamination processing line, thus avoiding costly modifications and re-construction of the lamination equipment in the manufacturing of packaging laminates having a core layer. By applying the starch layer on to a thin carrier layer such as a plastics film or a thin paper having a smooth, essentially non-absorbing surface, in the subsequence lamination with further layers of plastics and a core layer, the lamination operation may be performed using the same equipment and process as is used today, when laminating for example Al foil and inside layers.

From sheet or web-shaped, preferably pre-creased and colour decorated, blanks of the packaging laminate 10, liquid-tight, dimensionally stable packages of the single-use disposable type are produced in accordance with conventional "form-fill-seal" technology, according to which the packages are formed, filled and sealed by means of modern, rational packaging and filling machines. From, for example, a web of the packaging laminate, such packages are produced in that the web is first reformed into a tube, by both longitudinal edges of the tube being united with another by heat sealing in a longitudinal overlap joint seal. The tube is filled with the pertinent contents, for example liquid food, and is divided into individual packages by repeated transverse sealings of the tube, transversely across the longitudinal axis of the tube, beneath the level of the contents in the tube. The packages are finally separated from one another by transverse incisions along the transverse seals and are given the desired geometric, normally parallelepipedic form by an additional forming and heat-sealing operation in a per se known manner.

Using the methods and materials described above by applying the aqueous solution of starch or a derivative on to a substrate layer for supporting the starch layer, which consists of a specifically chosen material, in combination with subsequent drying and lamination to a layer of plastics by heat fusion of the plastics surface, highly improved oxygen gas barrier properties are obtained in packaging laminates compared to those of WO97/16312. The improvement in the gas barrier properties of the laminated starch layer has been improved radically by a factor of about 10, into a so-called high performance barrier layer. The best gas barrier results have been obtained when the carrier layer consists of a polymer or has a polymer coated surface, but also a thin paper layer having a surface weight of approximately 10-25 g/m2 with smooth, essentially non-absorbing surfaces, will provide improved gas barrier properties com-pared to those previously known in connection with starch.

When 2 grams of starch per m² is coated on to a plastic film (polyester- PET) and subsequently extrusion coated by a layer of LDPE, an oxygen gas barrier of only 9 cm³/m² at 24 h, 1 atm (23°C, 50% RH) is obtained. Similarly, a starch layer of 5 g/m² results in an oxygen barrier of about 4 cm³/m² and 7 g/m² in only 3 cm³/m².

The optimal gas barrier properties obtained in these examples when using a carrier layer of plastics or having a surface of plastics are, thus believed to be at least partly the result of the quality of the surface, i.e. smoothness and liquid repellence. Whilst the mechanism of the effect obtained using a fusion bonded interface between starch and plastic layers is not fully understood, the optimal gas barrier properties may also partly be the result of there being such an interface formed on both sides of the starch layer, since the substrate layer to which the starch is applied is a plastics layer and the same kind of phenomenon may occur at this interface upon the application of heat to the starch and plastic layers.

The starch gas barrier layer according to the invention is advantageously applied in an amount of from about 0.5 to 3 g/m², dry weight. At amounts lower than 0.5 g/m², the tolerances of the layer thickness as well as the gas barrier properties will become less reliable. On the other hand, at amounts exceeding about 3 g/m², the risks that the starch barrier layer may become brittle and inflexible will increase. However, amounts applied of up to about 5 g/m², dry weight, are possible and for some type of packages and uses even higher amounts might be acceptable. The gas barrier property of the starch layer generally improves with increasing thickness. The optimal and preferred applied amount of starch ranges from about 1.5 to about 2 g/m².

### Examples

Packing laminates were prepared using a core of Billerud Duplex paperboard bearing 12 gm/² LDPE on the outside.

These were prepared by extrusion coating LDPE at 325°C on to "Duplex" paperboard (Billerud) having a surface weight of 280 g/m² and a bending stiffness/flexural rigidity of 320 mN. The LDPE was LD273 (Dow), having a melt index of 6.5 to 7.5.

Extrusion of LDPE was carried out by means of a single screw extruder on to the paperboard just before passing between a cooling roller and a counter pressure roller. The cooling roller had a surface temperature of about 10 to 15°C.

Various combinations of carrier material and barrier material as detailed in Table 1 were prepared and each was laminated to the inside of the paperboard core by extrusion therebetween of a layer of 10 to 15 g/m² LDPE at 325°C. In preparing the barrier material/carrier material element starch was prepared for use in coating from a dry powder stae by mixing 10 wt% of starch with water at ambient temperature to form a slurry. The slurry was heated with mixing to from 90 to 95°C and kept at that temperature for 30 minutes. During heating the starch swelled.

If possible, e.g. with Raisamyl 306 oxidised starch (Raisio), the starch was cooled to ambient before use in coating. However, where this would have caused the starch to gel, e.g. with CERESTAR hydroxy-propylated starch, the starch would have been coated hot (60°C).

A wet weight of approximately ten times the desired dry coating weight was applied to the carrier material in web form using a liquid film coating/dispersion machine from Hirano of the knife-over-roll type, also known as a "comma-direct coater" or "bull-nose coater".

For starch a first drying stage using IR heating to 80 to 100°C was used to speed the drying process followed by a hot air drying step in which the starch coating was hot air dried at web speed of 1 m/min at a temperature of 110°C. Generally, a temperature of 100 to 130°C is suitable depending on the linespeed.

In some cases the dried starch layer was extrusion coated with LDPE. About 25 g/m² of LDPE was extruded on to the dried starch layer at about 200 m/minute, 325°C, cooling roller at 10 to 15°C, as above. The distance between the extrusion die to the web was normally 10 to 30 cm. The extruded LDPE hit the web just before entering between the cooling roller and the counter pressure roller.

PVOH/EAA was applied as a solution in water and dried at 150°C followed by curing at 225°C.

The results obtained in terms of oxygen gas barrier of the packaging laminate (adjusted to remove the contribution of OPET where necessary) are shown in Table 1.

**TABLE 1**

| Carrier | | Barrier | Barrier coating weight/ thickness | PE coated on barrier | O₂ barrier cm³/m², 24h 1 atm, 23°C 50% RH |
|---|---|---|---|---|---|
| 36µm (9) | OPET | Raisamyl | 2µm | No | 13 |
| 36µm (9) | OPET | Raisamyl | 5µm | No | 6 |
| 36µm (9) | OPET | Raisamyl | 7µm | No | 5 |
| 36µm (9) | OPET | Raisamyl | 2µm | Yes | 9 |
| 36µm (9) | OPET | Raisamyl | 5µm | Yes | 4 |
| 36µm (9) | OPET | Raisamyl | 7µm | Yes | 3 |
| 13g/m² paper, coated | ldpe | PVOH + 20% EAA | 5g/m² | No | <1 |
| 13g/m² paper, coated | ldpe | PVOH + 5% EAA | 5g/m² | No | <1 |

## Claims

1. A method of producing a laminated packaging material (10) comprising a core layer (16) of paper or paperboard and a gas barrier layer (14) applied on one side of the core layer, **characterized in that** polymer dispersion or polymer solution is applied as a gas barrier layer (14) on at least one side of a carrier layer (11) and is dried during heating for driving off water, whereafter the carrier layer (11) with the applied, dried gas barrier layer (14) is combined and permanently united with one side of the core layer (16).

2. A method as claimed in Claim 1, **characterized in that** said gas barrier layer (14) is applied by means of liquid film coating with an aqueous polymer dispersion or solution.

3. A method as claimed in Claim 1 or Claim 2, **characterized in that** said aqueous polymer dispersion or polymer solution applied as gas barrier layer (14) includes a polymer with functional hydroxyl groups.

4. A method as claimed in Claim 3, **characterized in that** said polymer with functional hydroxyl groups is selected from among polyvinyl alcohol, ethylene vinyl alcohol, starch, starch derivatives, carboxyl methyl cellulose and other cellulose derivatives, or a mixture of two or more thereof.

5. A method as claimed in any one of Claims 1 to 4, **characterized in that** said aqueous polymer dispersion or polymer solution applied as gas barrier layer (14) is dried and optionally cured at a temperature of approximately 80 to 230°C.

6. A method as claimed in any one of Claims 1 to 4, **characterized in that** said aqueous polymer dispersion or polymer solution applied as gas barrier layer (14) is dried at a temperature of 140° to 160°C and is cured at a temperature of from 170 to 230°C.

7. A method as claimed in any one of Claims 1 to 6, **characterized in that** said aqueous polymer dispersion or polymer solution applied as gas barrier layer (14) also includes a polymer with functional carboxylic acid groups.

8. A method as claimed in Claim 7, **characterized in that** said polymer with functional carboxylic acid groups is selected from among ethylene acrylic acid copolymer and ethylene methacrylic acid copolymer or mixtures thereof.

9. A method as claimed in Claim 8, **characterized in that** said gas barrier layer (14) consists of a mixture of polyvinyl alcohol and ethylene acrylic acid copolymer.

10. A method as claimed in any one of Claims 7 to 9, **characterized in that** the dried gas barrier layer (14) is cured at a temperature of up to 190°C.

11. A method as claimed in any one of Claims 1 to 10, **characterized in that** said gas barrier layer (14) is applied on the carrier layer (11) in an amount of approximately 0,5 to 20 g/m², preferably 2 to 10 g/m².

12. A method as claimed in any one of Claims 1 to 11, **characterized in that** said carrier layer (11) consists of paper or plastics.

13. A method as claimed in any one of Claims 1 to 12, **characterized in that** said carrier layer (11) consists of paper with a grammage of 15 to 35 g/m².

14. A method as claimed in any preceding claim, wherein the carrier layer bearing at least one said gas barrier layer is combined and united with the core layer by extrusion of a layer of thermoplastics therebetween.

15. A method as claimed in Claim 14, wherein said carrier layer bears a said gas barrier layer on one side thereof and is combined with the core layer by extrusion of a layer of thermoplastics between the carrier layer and the core layer.

16. A method as claimed in Claim 15, **characterized in that** an outer layer (21, 22) of thermoplastics, is applied on the gas barrier layer (14) by means of extrusion.

17. A method as claimed in Claim 14, wherein said carier layer bears a said gas barrier layer on one or both sides and is combined with the core layer by extrusion of a layer of thermoplastics between the core layer and a said gas barrier layer.

18. A method as claimed in Claim 17, wherein said carrier layer bears a said gas barrier layer on both sides thereof and a layer of thermoplastics is applied to the outer layer of gas barrier material by extrusion.

19. A method as claimed in any one of Claims 1 to 18, **characterized in that** the layer (19) of plastics applied between the core layer (16) and the carrier layer (11) or a said gas barrier layer (14) includes a substance functioning as light barrier.

20. A laminated packaging material (10), **characterized in that** it is produced by the method as claimed in any of Claims 1 to 19.

21. A laminated packaging material (10) as claimed in Claim 20, having paper or paperboard core and one or more gas barrier layers (14) of starch or a starch derivative providing an oxygen gas barrier property of 50 cm³/m² at 24h, 1 atm (23°C, 50% RH) or better, said gas barrier layer or layers having a dry coating weight or aggregate coating weight no more than 7 gm⁻².

22. A laminated packaging material (10) as claimed in Claim 21, wherein the oxygen barrier property provided by the starch or starch derivative layer or layers (14) is 30 cm³/m² at 24h, 1 atm (23°C, 50% RH) or better.

23. A laminated packaging material (10) as claimed in Claim 21 or Claim 22, comprising a layer of plastics laminated directly with the said gas barrier layer (14).

24. A laminated packaging material (10) as claimed in Claim 23, wherein said plastics is polyethylene, polypropylene or polyethylene terephthalate.

25. A laminated packaging material (10) as claimed in any one of Claims 21 to 24, wherein the or each gas barrier layer (14) is applied at a dry coating weight of up to 5gm⁻².

26. A laminated packaging material (10) as claimed in Claim 25, wherein the or each gas barrier layer (14) is applied at a dry coating weight of from 0.5 to 4 gm⁻².

27. A laminated packaging material (10) as claimed in Claim 25, wherein the or each gas barrier layer (14) is applied at a dry coating weight of from 0.5 to 3 gm⁻².

28. A laminated packaging material (10) as claimed in Claim 25, wherein the or each gas barrier layer (14) is applied at a dry coating weight of from 1.5 to 2 gm⁻².

29. A laminated packaging material (10) as claimed in any preceding claim, wherein the or each gas barrier layer (14) further comprises a minor amount of polyvinyl alcohol, ethylene acrylic acid, or a mixture thereof.

30. A packaging container (24), **characterized in that** it is produced by fold formation of a sheet or web-shaped laminated packaging material (10) as claimed in any one of Claims 20 to 29.

## Patentansprüche

1. Verfahren zur Herstellung eines laminierten bzw. mehrschichtigen Packungsmaterials (10), das eine Kernschicht (16) aus Papier oder Pappe umfasst und eine Gasbarriereschicht (14), die auf einer Seite der Kernschicht aufgebracht ist, **dadurch gekennzeichnet, dass** eine Polymerdispersion oder Polymerlösung als eine Gasbarriereschicht (14) auf mindestens einer Seite einer Trägerschicht (11) aufgebracht ist und während der Erwärmung zum Wegtreiben von Wasser getrocknet wird, wonach die Trägerschicht (11) mit der aufgebrachten, getrockneten Gasbarriereschicht (14) kombiniert und permanent mit einer Seite der Kernschicht (16) vereinigt wird.

2. Verfahren nach Anspruch 1, **dadurch gekennzeichnet, dass** die Gasbarriereschicht (14) mittels einer Flüssigfilmbeschichtung mit einer wässrigen Polymerdispersion oder - lösung aufgebracht wird.

3. Verfahren nach Anspruch 1 oder Anspruch 2, **dadurch gekennzeichnet, dass** die wässrige Polymerdispersion oder Polymerlösung, die als Gasbarriereschicht (14) aufgebracht wird, ein Polymer mit funktionellen Hydroxyl-Gruppen umfasst.

4. Verfahren nach Anspruch 3, **dadurch gekennzeichnet, dass** das Polymer mit funktionellen Hydroxyl-Gruppen ausgewählt wird unter: Polyvinylalkohol, Ethylen-Vinyl-Alkohol, Stärke, Stärkederivate, Karboxyl-Methyl-Zellulose und anderen Zellulosederivaten, oder einem Gemisch aus zwei oder mehr aus diesen.

5. Verfahren nach einem der Ansprüche 1 bis 4, **dadurch gekennzeichnet, dass** die wässrige Polymerdispersion oder Polymerlösung, die als Gasbarriereschicht (14) aufgebracht wird, getrocknet und optional bei einer Temperatur von ungefähr 80 bis 230° C ausgehärtet wird.

6. Verfahren nach einem der Ansprüche 1 bis 4, **dadurch gekennzeichnet, dass** die wässrige Polymerdispersion oder Polymerlösung, die als Gasbarriereschicht (14) aufgebracht wird, bei einer Temperatur von 140° bis 160° C getrocknet und bei einer Temperatur von 170 bis 230° C ausgehärtet wird.

7. Verfahren nach einem der Ansprüche 1 bis 6, **dadurch gekennzeichnet, dass** die wässrige Polymerdispersion oder Polymerlösung, die als Gasbarriereschicht (14) aufgebracht wird, ebenfalls ein Polymer mit funktionalen Karboxyl-Säuregruppen umfasst.

8. Verfahren nach Anspruch 7, **dadurch gekennzeichnet, dass** das Polymer mit funktionalen Karboxyl-Säuregruppen ausgewählt wird unter: Ethylen-Acryl-Säurekopolymer und Ethylen-Methacryl-Säurekopolymer oder Gemischen daraus.

9. Verfahren nach Anspruch 8, **dadurch gekennzeichnet, dass** die Gasbarriereschicht (14) aus einem Gemisch aus Polyvenylalkohol und Ethylen-Acryl-Säurekopolymer besteht.

10. Verfahren nach einem der Ansprüche 7 bis 9, **dadurch gekennzeichnet, dass** die getrocknete Gasbarriereschicht (14) bei einer Temperatur von bis zu 190° C ausgehärtet wird.

11. Verfahren nach einem der Ansprüche 1 bis 10, **dadurch gekennzeichnet, dass** die Gasbarriereschicht (14) in einer Menge von ungefähr 0,5 bis 20 g/m², vorzugsweise 2 bis 10 g/m² auf die Trägerschicht (11) aufgebracht wird.

12. Verfahren nach einem der Ansprüche 1 bis 11, **dadurch gekennzeichnet, dass** die Trägerschicht (11) aus Papier oder Kunststoff besteht.

13. Verfahren nach einem der Ansprüche 1 bis 12, **dadurch gekennzeichnet, dass** die Trägerschicht (11) aus Papier mit einem Quadratmetergewicht von 15 bis 35 g/m² besteht.

14. Verfahren nach einem der vorhergehenden Ansprüche, bei dem die Trägerschicht, die mindestens eine Gasbarriereschicht trägt, durch Zwischenextrusion einer Thermoplasten-Schicht mit der Kernschicht kombiniert und vereinigt wird.

15. Verfahren nach Anspruch 14, bei dem die Trägerschicht eine Gasbarriereschicht auf einer ihrer Seiten trägt und mit der Kernschicht durch Extrusion einer Thermoplasten-Schicht zwischen die Trägerschicht und die Kernschicht kombiniert wird.

16. Verfahren nach Anspruch 15, **dadurch gekennzeichnet, dass** eine äußere Schicht (21, 22) aus thermoplastischem Material auf der Gasbarriereschicht (14) mittels Extrusion aufgebracht wird.

17. Verfahren nach Anspruch 14, bei dem die Trägerschicht eine Gasbarriereschicht auf einer oder beiden Seiten trägt und mit der Kernschicht durch die Extrusion einer Thermoplasten-Schicht zwischen die Kernschicht und die Gasbarriereschicht kombiniert wird.

18. Verfahren nach Anspruch 17, bei dem die Trägerschicht eine Gasbarriereschicht auf beiden ihrer Seiten trägt und eine Thermoplasten-Schicht durch Extrusion auf die äußere Schicht des Gasbarrierematerials aufgebracht wird.

19. Verfahren nach einem der Ansprüche 1 bis 18, **dadurch gekennzeichnet, dass** die Schicht (19) aus Kunststoff, die zwischen die Kernschicht (16) und die Trägerschicht (11) eingebracht wird, oder die Gasbarriereschicht (14) eine Substanz umfasst, die als Lichtbarriere arbeitet.

20. Laminiertes bzw. Mehrschicht-Verpackungsmaterial (10), **dadurch gekennzeichnet, dass** es durch das Verfahren nach einem der Ansprüche 1 bis 19 hergestellt ist.

21. Laminiertes bzw. Mehrschicht-Verpackungsmaterial nach Anspruch 20, mit einem Papier- oder Pappekern und einer oder mehreren Gasbarriereschichten (14) aus Stärke oder einem Stärkederivat, die eine Sauerstoff-Gasbarrieren-Eigenschaft von 50 cm³/m² bei 24 Stunden, einer ATM (23° C, 50% RH) oder besser beträgt, wobei die Gasbarriereschicht oder die Schichten ein Trockenbeschichtungsgewicht oder Aggregat-Beschichtungsgewicht haben, das nicht größer ist als 7 gm⁻².

22. Laminiertes bzw. Mehrschicht-Verpackungsmaterial (10) nach Anspruch 21, bei dem die Sauerstoffbarrieren-Eigenschaft, die durch die Stärke- oder Stärkederivat-Schicht oder -Schichten (14) bereitgestellt wird, 30 cm³/m² bei 24 Stunden, 1 ATM (23° C, 50% RH) oder besser beträgt.

23. Laminiertes bzw. Mehrschicht-Verpackungsmaterial (10) nach Anspruch 21 oder 22, welches eine Schicht aus Kunststoff umfasst, die direkt mit der Gasbarriereschicht (14) laminiert ist.

24. Laminiertes bzw. Mehrschicht-Verpackungsmaterial (10) nach Anspruch 23, bei dem der Kunststoff Polyethylen, Polypropylen oder Polyehtylen-Terephthalat ist.

25. Laminiertes bzw. Mehrschicht-Verpackungsmaterial (10) nach einem der Ansprüche 21 bis 24, bei dem die oder jede Gasbarriereschicht (14) bei einem Trockenbeschichtungsgewicht von bis zu 5 gm⁻² aufgebracht wird.

26. Laminiertes bzw. Mehrschicht-Verpackungsmaterial (10) nach Anspruch 25, bei dem die oder jede Gasbarriereschicht (14) bei einem Trockenbeschichtungsgewicht von 0,5 bis 4 gm⁻² aufgebracht wird.

27. Laminiertes bzw. Mehrschicht-Verpackungsmaterial (10) nach Anspruch 25, bei dem die oder jede Gasbarriereschicht (14) bei einem Trockenbeschichtungsgewicht von 0,5 bis 3 gm⁻² aufgebracht wird.

28. Laminiertes bzw. Mehrschicht-Verpackungsmaterial (10) nach Anspruch 25, bei dem die oder jede Gasbarriereschicht (14) bei einem Trockenbeschichtungsgewicht von 1,5 bis 2 gm⁻² aufgebracht wird.

29. Laminiertes bzw. Mehrschicht-Verpackungsmaterial (10) nach einem der vorhergehenden Ansprüche, bei dem die oder jede Gasbarriereschicht (14) ferner eine geringfügige Menge an Polyvenylalkohol, Ethylen-Acryl-Säure oder ein Gemisch davon umfasst.

30. Verpackungsbehälter (24), **dadurch gekennzeichnet, dass** er durch eine Faltung eines Flächenmaterials oder eines bahnförmigen, laminierten bzw. Mehrschicht-Verpackungsmaterials (10) hergestellt wird, wie es in einem der Ansprüche 20 bis 29 beansprucht wird.

## Revendications

1. Procédé pour produire un matériau d'emballage (10) laminé, comprenant une couche formant noyau (16) en papier ou en papier cartonné et une couche formant barrière aux gaz (14), appliquée sur une face de la couche formant noyau, **caractérisé en ce qu'**une dispersion de polymère ou une solution de polymère est appliquée en tant que couche formant barrière aux gaz (14), sur au moins une face de la couche support (11), et est séchée durant le chauffage, afin d'évacuer l'eau, à la suite de quoi la couche support (11), portant la couche formant barrière aux gaz (14), séchée, appliquée et réunie de façon permanente à une face de la couche formant noyau (14).

2. Procédé selon la revendication 1, **caractérisé en ce que** ladite couche formant barrière aux gaz (14) est appliquée par revêtement par un film liquide, avec une dispersion ou une solution aqueuse de polymère

3. Procédé selon la revendication 1 ou la revendication 2, **caractérisé en ce que** ladite dispersion aqueuse de polymère ou solution aqueuse de polymère, appliquée en tant que couche formant barrière aux gaz (14), comprend un polymère ayant des groupes fonctionnels hydroxyle.

4. Procédé selon la revendication 3, **caractérisé en ce que** ledit polymère ayant des groupes fonctionnels hydroxyle est sélectionné parmi l'alcool polyvinylique, l'éthylène-alcool vinylique, l'amidon, les dérivés de l'amidon, la carboxyle méthyle cellulose et d'autres dérivés de la cellulose, ou bien un mélange de deux ou plusieurs de ces polymères.

5. Procédé selon l'une quelconque des revendications 1 à 4, **caractérisé en ce que** ladite dispersion aqueuse de polymère ou solution aqueuse de polymère, appliquée en tant que couche formant barrière aux gaz (14), est séchée et, en option, polymérisée à une température d'environ 80 à 230°C.

6. Procédé selon l'une quelconque des revendications 1 à 4, **caractérisé en ce que** ladite dispersion aqueuse de polymère ou solution aqueuse de polymère, appliquée en tant que couche formant barrière aux gaz (14), est séchée à une température de 140°C à 160°C et est polymérisée à une température d'environ 170 à 230°C.

7. Procédé selon l'une quelconque des revendications 1 à 6, **caractérisé en ce que** ladite dispersion aqueuse de polymère ou solution aqueuse de polymère, appliquée en tant que couche formant barrière aux gaz (14), comprend également un polymère ayant des groupes fonctionnels d'acide carboxylique.

8. Procédé selon la revendication 7, **caractérisé en ce que** ledit polymère ayant des groupes fonctionnels d'acide carboxylique est sélectionné parmi un copolymère éthylène-acide acrylique et un copolymère éthylène-acide méthacrylique, ou bien de mélanges de ceux-ci.

9. Procédé selon la revendication 8, **caractérisé en ce que** ladite couche formant barrière aux gaz (14) est formée d'un mélange d'alcool polyvinylique et de copolymère éthylène-acide acrylique.

10. Procédé selon l'une quelconque des revendications 7 à 9, **caractérisé en ce que** la couche formant barrière aux gaz (14) séchée est polymérisée à une température allant jusqu'à 190°C.

11. Procédé selon l'une quelconque des revendications 1 à 10, **caractérisé en ce que** ladite couche formant barrière aux gaz (14) est appliquée sur la couche support (11), en une quantité d'environ 0,5 à 20 g/m², de préférence 2 à 10 g/m².

12. Procédé selon l'une quelconque des revendications 1 à 11, **caractérisé en ce que** la couche support (11) est formée de papier ou de matière synthétique.

13. Procédé selon l'une quelconque des revendications 1 à 12, **caractérisé en ce que** ladite couche support (11) est formée de papier d'un grammage de 15 à 35 g/m².

14. Procédé selon l'une quelconque des revendications précédentes, dans lequel la couche support, portant au moins une couche formant barrière aux gaz, est combinée et réunie à la couche formant noyau, par extrusion, entre elles, d'une couche de matière thermoplastique.

15. Procédé selon la revendication 14, dans lequel la couche support porte une dite couche formant barrière aux gaz, sur une face de celle-ci, et est combinée à la couche formant noyau par extrusion d'une couche en matière thermoplastique, entre la couche support et la couche formant noyau.

16. Procédé selon la revendication 15, **caractérisé en ce qu'**une couche extérieure (21, 22) en matériau thermoplastique est appliquée par extrusion sur la couche formant barrière aux gaz (14).

17. Procédé selon la revendication 14, dans lequel ladite couche support porte une dite couche formant barrière aux gaz, sur une ou les deux faces, et est combinée à la couche formant noyau par extrusion d'une couche de matière thermoplastique entre et la couche formant noyau et une dite la couche formant barrière aux gaz.

18. Procédé selon la revendication 17, dans lequel ladite couche support porte une dite couche formant barrière aux gaz, sur les deux faces de celle-ci, et une couche en matériau thermoplastique est appliquée sur la couche extérieure du matériau formant barrière aux gaz, par extrusion.

19. Procédé selon l'une quelconque des revendications 1 à 18, **caractérisé en ce que** la couche (19) en matériau synthétique, appliquée entre la couche formant noyau (16) et la couche support (11) ou une dite couche formant barrière aux gaz (14), comprend une substance servant de barrière à la lumière.

20. Matériau d'emballage laminé (10), **caractérisé en ce qu'**il est produit par le procédé selon l'une quelconque des revendications 1 à 19.

21. Matériau d'emballage laminé (10) selon la revendication 20, comportant un noyau en papier ou en papier cartonné et une ou plusieurs couches formant barrière aux gaz (14) en amidon ou en dérivé d'amidon, fournissant une propriété de barrière à l'oxygène, d'une caractéristique de 50 cm³/m² à 24h, 1 atm (23°C, 50 % d'humidité relative) ou mieux, ladite couche ou lesdites couches formant barrière aux gaz, ayant un poids de revêtement à sec, ou un poids de revêtement agrégé, non supérieur à 7 gm⁻².

22. Matériau d'emballage laminé (10) selon la revendication 21, dans lequel ladite propriété de barrière à l'oxygène, fournie par la couche ou les couches (14) en amidon ou en dérivé de l'amidon, est de 30 cm³/m² à 24h, 1 atm (23°C, 50 % d'humidité relative) ou mieux.

23. Matériau d'emballage laminé (10) selon la revendication 21 ou 22, comprenant une couche en matière plastique, laminée directement avec ladite couche formant barrière aux gaz (14).

24. Matériau d'emballage laminé (10) selon la revendication 23, dans lequel ladite matière plastique est du polyéthylène, du polypropylène ou du téréphtalate de polyéthylène.

25. Matériau d'emballage laminé (10) selon l'une quelconque des revendications 21 à 24, dans lequel la couche ou chaque couche formant barrière aux gaz (14) est appliquée à un poids de revêtement, à sec, allant jusqu'à 5 gm⁻².

26. Matériau d'emballage laminé (10) selon la revendication 25, dans lequel la ou chaque couche formant barrière aux gaz (14) est appliquée à un poids de revêtement à sec compris entre 0,5 et 4 gm⁻².

27. Matériau d'emballage laminé (10) selon la revendication 25, dans lequel la ou chaque couche formant barrière aux gaz (14) est appliquée à un poids de revêtement à sec compris entre 0,5 et 3 gm⁻².

28. Matériau d'emballage laminé (10) selon la revendication 25, dans lequel la ou chaque couche formant barrière aux gaz (14) est appliquée à un poids de revêtement à sec compris entre 1,5 et 2 gm⁻².

29. Matériau d'emballage laminé (10) selon l'une quelconque des revendications précédentes, dans lequel la ou chaque couche formant barrière aux gaz (14) comprend en outre une quantité mineure d'alcool polyvinylique, d'éthylène-acide acrylique, ou d'un mélange de ceux-ci.

30. Récipient d'emballage (24), **caractérisé en ce qu'**il est produit par formation par pliage d'une feuille ou d'un matériau d'emballage laminé (10) en forme de nappe, comme revendiqué par l'une quelconque des revendications 20 à 29.
